# EUROPÄISCHE PATENTSCHRIFT

(11) **EP 4 665 609 B1**
(45) Veröffentlichungstag und Bekanntmachung des Hinweises auf die Patenterteilung: **03.06.2026**
(21) Anmeldenummer: 24705432.3
(22) Anmeldetag: 14.02.2024
(51) Int. Cl.: B60Q 1/14, H01H 25/04, G05G 1/04, G05G 5/03

(54) **LENKSTOCKSCHALTER FÜR EIN KRAFTFAHRZEUG**
STEERING COLUMN SWITCH FOR A MOTOR VEHICLE
COMMUTATEUR DE COLONNE DE DIRECTION POUR UN VÉHICULE À MOTEUR

(30) Priorität: 17.02.2023 DE 102023103973
(43) Veröffentlichungstag der Anmeldung: 24.12.2025
(73) Patentinhaber: KOSTAL Automobil Elektrik GmbH & Co. KG, 58513 Lüdenscheid (DE)
(72) Erfinder: DEITMERG, Martin, 58507 Lüdenscheid (DE); TRINN, Alexander, 58515 Lüdenscheid (DE)
(74) Vertreter: Leopold Kostal GmbH & Co. KG
(86) Internationale Anmeldenummer: PCT/EP2024/053668
(87) Internationale Veröffentlichungsnummer: WO 2024/170591

(56) Entgegenhaltungen:
- EP-A1- 1 715 498
- DE-A1- 102004 033 446
- DE-A1- 102011 111 871
- DE-A1- 19 744 088
- DE-A1- 19 943 490

## Beschreibung

Die Erfindung betrifft einen Lenkstockschalter für ein Kraftfahrzeug mit zumindest einem an einem Lenkstockschaltergehäuse verschwenkbar gelagerten Schalthebel, mit einem Betätigungshebelarm, der ausgehend von einer stabilen Neutralstellung gegen eine rückstellende Kraft in zumindest eine Funktionsstellung verschwenkbar ist, wobei mit dem Erreichen jeder Funktionsstellung jeweils eine zugeordnete Funktion geschaltet wird, und wobei die rückstellende Kraft durch einen in einer Schaltkulisse geführten, federbelasteten Rastbolzen bewirkt wird, wobei der Schalthebel als einarmiger Hebel ausgebildet ist, und wobei die Schaltkulisse und der Rastbolzen im Inneren des Betätigungshebelarms angeordnet sind.

An Lenkstockschalter dieser Art werden vielfältige Funktionsanforderungen gestellt. So erfolgt über eine Vielzahl von Schwenkbewegungen des Schalthebels in unterschiedliche Richtungen z. B. das Ein- bzw. Ausschalten der Wischfunktionen, der Blinkfunktionen, der Lichthupe oder der Fernlichtumschaltung.

Es gibt Lenkstockschalter, welche tastend und/oder rastend in ihre Funktionsstellungen zu bringen sind. Dabei kehrt der Schalthebel nach Verlassen der jeweiligen Funktionsstellung automatisch in seine Neutralstellung zurück. Die Definition der Neutralstellung sowie der Funktionsstellungen erfolgt dabei durch das Zusammenwirken eines federbelasteten Rastbolzens mit einer zugeordneten Schaltkulisse, welches eine rückstellende Kraft auf den Schalthebel ausübt.

So ist z.B. durch die DE 197 44 088 A1 ein dem Oberbegriff des Hauptanspruchs entsprechender Lenkstockschalter für Kraftfahrzeuge bekannt geworden. Bei diesem Schalter ist ein Betätigungsknopf des Schalters über ein Kreuzgelenk mit einem unbeweglichen Hebelabschnitt verbunden. Die Schaltkulisse ist hier mit dem Betätigungsknopf fest verbunden.

Im Markt stellen sich zunehmend Anforderungen, den für die sogenannten Unterschalter, d.h. die Bestandteile des Schalters, die sich im Inneren des Lenkstockschaltergehäuses befinden, erforderlichen Bauraum stark zu reduzieren, um den gewonnenen Platz für andere Funktionen wie etwa eine Fahrerbeobachtungskamera oder weitere Sensoren nutzen zu können. Gleichzeitig werden aber auch immer kleinere Betätigungswinkel für die Hebelbewegung gefordert. Eine gute Haptik wird bei bisherigen Lenkstockschaltern unter anderem dadurch erreicht, dass der Rastbolzen bei Betätigung des Hebels einen ausreichend großen Weg in der Schaltkulisse zurücklegt. Werden die Betätigungswinkel verkleinert, so verringert sich bei gleichem Abstand der Schaltkulisse zum Hebeldrehpunkt dieser Weg und die Haptik wird spürbar schlechter. Eine Vergrößerung dieses Abstandes würde allerdings wieder mehr Bauraum im Inneren des Lenkstockschaltergehäuses erfordern, der jedoch nicht zur Verfügung steht.

Der Lenkstockschalter gemäß der vorliegenden Erfindung hat gegenüber den bisher bekannten den Vorteil, genau dieses Dilemma aufzulösen.

Dies wird erfindungsgemäß dadurch erreicht, dass der federbelastete Rastbolzen in einer mit dem Betätigungshebelarm fest verbundenen Rastbolzenhülse aufgenommen ist, und dass die Schaltkulisse mit einem am Lenkstockschaltergehäuse festgelegten Trägerteil fest verbunden ist.

Eine Verschwenkbarkeit des erfindungsgemäßen Lenkstockschalters um zwei zueinander senkrecht angeordnete Achsen wird dadurch ermöglicht, dass die Lagerung des Schalthebels an dem Lenkstockschaltergehäuse mittels eines Kardangelenks erfolgt.

Anhand der in der Zeichnung dargestellten Ausführungsbeispiele wird die Erfindung im Folgenden näher erläutert. Dabei zeigen (jeweils in einer Zusammenbau- und einer Explosionsdarstellung):
- Fig. 1:: eine erste Ausführungsform eines erfindungsgemäßen Lenkstockschalters mit einer mit dem Betätigungshebelarm fest verbundenen Rastbolzenhülse
- Fig. 2:: eine zweite Ausführungsform eines erfindungsgemäßen Lenkstockschalters mit einer mit dem Betätigungshebelarm fest verbundenen Rastbolzenhülse

Wie aus der Zeichnung ersichtlich, umfasst ein erfindungsgemäßer Lenkstockschalter für Kraftfahrzeuge in allen dargestellten Ausführungsformen einen an einem Lenkstockschaltergehäuse 1 schwenkbar gelagerten Schalthebel. Der Schalthebel ist dabei als einarmiger Hebel ausgebildet, dessen einziger Arm den Betätigungshebelarm 2 des Schalthebels bildet.

Der Betätigungshebelarm 2 ist mittels eines Kardangelenks 7 um zwei zueinander senkrecht angeordnete Achsen verschwenkbar gelagert und so ausgehend von einer stabilen Neutralstellung gegen eine rückstellende Kraft in mehrere Funktionsstellungen bringbar. Mit dem Erreichen jeder Funktionsstellung wird dabei jeweils eine zugeordnete Funktion elektrisch geschaltet. Die rückstellende Kraft für den Betätigungshebelarm 2 wird durch einen in einer Schaltkulisse 3 geführten, federbelasteten Rastbolzen 4 bewirkt. Die einzelnen Funktionsstellungen können jeweils rastend oder tastend ausgelegt sein, was in bekannter Weise durch entsprechende Gestaltung der Schaltkulisse 3 realisiert wird.

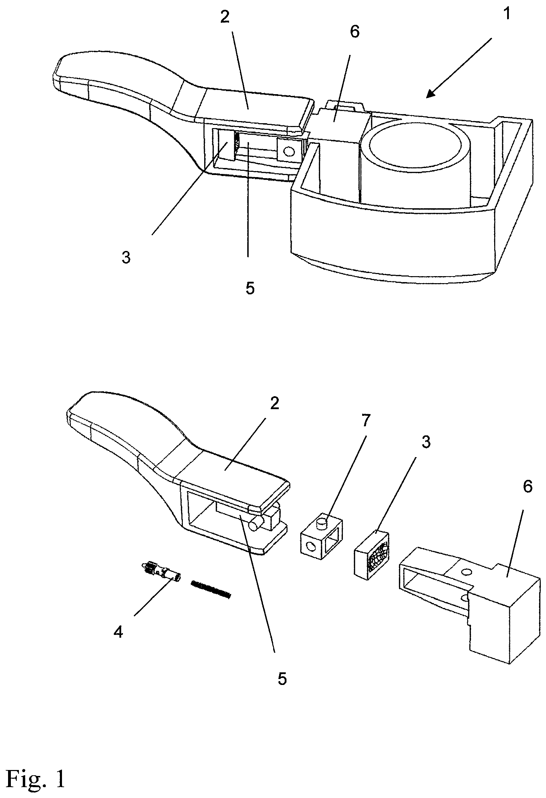

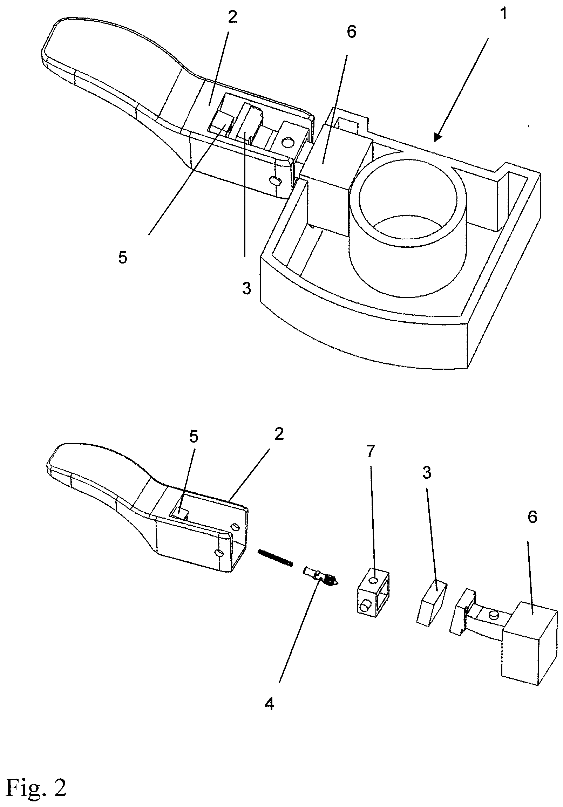

Bei den in den Figuren 1 und 2 gezeigten Ausführungsformen des erfindungsgemäßen Lenkstockschalters ist jeweils eine zur Aufnahme des Rastbolzens 4 vorhandene Rastbolzenhülse 5 mit dem Betätigungshebelarm 2 fest verbunden. Die jeweilige Schaltkulisse 3 ist dabei an einem am Lenkstockschaltergehäuse 1 festgelegten Trägerteil 6 fest verbunden. Diese beiden Ausführungsformen unterscheiden sich dahingehend, dass bei derjenigen nach Figur 1 die Spitze des Rastbolzens 4 in Richtung des distalen Endes des Betätigungshebelarms 2 weist, während bei der Ausführung nach Figur 2 die Spitze des Rastbolzens 4 in Richtung des Trägerteils 6 weist. Dies zeigt auf, dass hier ein Gestaltungsspielraum gegeben ist, der nach den jeweiligen sonstigen Anforderungen insbesondere an die oftmals vorgegebene äußere Form des Betätigungshebelarms 2 ausgeschöpft werden kann.

Zum elektrischen Schalten der den Funktionsstellungen des Schalthebels jeweils zugeordneten Funktionen sind kontaktgebende oder sensorisch wirkende, also z.B. optisch oder magnetisch wirkende Schaltelemente vorhanden. Diese sind in den Zeichnungen nicht dargestellt, können aber ebenfalls im Inneren des Betätigungshebelarms 2 angeordnet sein, so dass auch für diese kein zusätzlicher Bauraum im Inneren des Lenkstockschaltergehäuses 1 zwingend erforderlich ist.

## Patentansprüche

1. Lenkstockschalter für ein Kraftfahrzeug mit zumindest einem an einem Lenkstockschaltergehäuse (1) verschwenkbar gelagerten Schalthebel, mit einem Betätigungshebelarm (2), der ausgehend von einer stabilen Neutralstellung gegen eine rückstellende Kraft in zumindest eine Funktionsstellung verschwenkbar ist, wobei mit dem Erreichen jeder Funktionsstellung jeweils eine zugeordnete Funktion geschaltet wird, und wobei die rückstellende Kraft durch einen in einer Schaltkulisse (3) geführten, federbelasteten Rastbolzen (4) bewirkt wird, wobei der Schalthebel als einarmiger Hebel ausgebildet ist, und wobei die Schaltkulisse (3) und der Rastbolzen (4) im Inneren des Betätigungshebelarms (2) angeordnet sind, **dadurch gekennzeichnet, dass** der federbelastete Rastbolzen (4) in einer mit dem Betätigungshebelarm (2) fest verbundenen Rastbolzenhülse (5) aufgenommen ist, und dass die Schaltkulisse (3) mit einem am Lenkstockschaltergehäuse (1) festgelegten Trägerteil (6) fest verbunden ist.

2. Lenkstockschalter nach Anspruch 1, **dadurch gekennzeichnet, dass** die verschwenkbare Lagerung des Schalthebels an dem Lenkstockschaltergehäuse (1) mittels eines Kardangelenks (7) realisiert ist, welches ein Verschwenken des Schalthebels um zwei zueinander senkrecht angeordnete Achsen ermöglicht.

3. Lenkstockschalter nach Anspruch 1oder 2, **dadurch gekennzeichnet, dass** zum elektrischen Schalten der den Funktionsstellungen des Schalthebels jeweils zugeordneten Funktionen kontaktgebende oder sensorisch wirkende Schaltelemente ebenfalls im Inneren des Betätigungshebelarms (2) angeordnet sind.

## Claims

1. Steering column switch for a motor vehicle having at least one switching lever pivotally mounted on a steering column switch housing (1), having an actuating lever arm (2) which, starting from a stable neutral position, can be pivoted against a restoring force into at least one functional position, wherein an associated function is switched in each case when each functional position is reached, and wherein the restoring force is caused by a spring-loaded latching pin (4) guided in a shift gate (3), wherein the switching lever is configured as a one-armed lever, and wherein the shift gate (3) and the latching pin (4) are arranged in the interior of the actuating lever arm (2), **characterised in that** the spring-loaded latching pin (4) is accommodated in a latching pin sleeve (5) fixedly connected to the actuating lever arm (2), and **in that** the shift gate (3) is fixedly connected to a carrier part (6) fixed to the steering column switch housing (1).

2. Steering column switch according to claim 1, **characterised in that** the pivotal mounting of the switching lever on the steering column switch housing (1) is implemented by means of a universal joint (7) which allows the switching lever to be pivoted about two axes arranged perpendicular to one another.

3. Steering column switch according to claim 1 or 2, **characterised in that** contact-making or sensory switching elements are likewise arranged in the interior of the actuating lever arm (2) for electrically switching the functions assigned to the functional positions of the switching lever.

## Revendications

1. Commutateur de colonne de direction pour un véhicule automobile, avec au moins un levier de commutation monté de manière pivotante sur un boîtier de commutateur de colonne de direction (1), avec un bras de levier d'actionnement (2) qui peut, à partir d'une position neutre stable, pivoter contre une force de rappel vers au moins une position fonctionnelle, dans lequel une fonction associée est commutée lorsque chaque position fonctionnelle est atteinte, et dans lequel la force de rappel est produite par un boulon d'arrêt (4) guidé dans une coulisse de commutation (3) et sollicité par un ressort, dans lequel le levier de commutation est conçu sous la forme d'un levier à un bras, et dans lequel la coulisse de commutation (3) et le boulon d'arrêt (4) sont disposés à l'intérieur du bras de levier d'actionnement (2), **caractérisé en ce que** le boulon d'arrêt (4) sollicité par un ressort est logé dans un manchon de boulon d'arrêt (5) relié de manière fixe au bras de levier d'actionnement (2), et **en ce que** la coulisse de commutation (3) est reliée de manière fixe à une pièce de support (6) fixée au boîtier de commutateur de colonne de direction (1).

2. Commutateur de colonne de direction selon la revendication 1, **caractérisé en ce que** le montage pivotant du levier de commutation sur le boîtier de commutateur de colonne de direction (1) est réalisé au moyen d'un joint de Cardan (7) qui permet un pivotement dudit levier de commutation autour de deux axes disposés perpendiculairement l'un par rapport à l'autre.

3. Commutateur de colonne de direction selon l'une des revendications 1 ou 2, **caractérisé en ce que**, pour la commutation électrique des fonctions associées respectivement aux positions fonctionnelles du levier de commutation, des éléments de commutation à contact ou agissant de manière sensorielle sont également disposés à l'intérieur du bras de levier d'actionnement (2).
